# EUROPEAN PATENT APPLICATION

(11) **EP 2 394 812 A1**
(43) Date of publication of application: **14.12.2011**
(21) Application number: 10160293.6
(22) Date of filing: 19.04.2010
(51) Int. Cl.: B32B 15/08, B32B 15/12, B32B 27/10, D21H 21/34, E04B 1/94

(54) **Composite material and sheet material provided therewith**

(71) Applicant: DQ Concepts B.V., 2271 CA Voorburg (NL)
(72) Inventor: Nossbaum, Frits Daniel, 2271 CA Voorburg (NL)
(74) Representative: Voncken, Bartholomeus Maria Ch.

(57) **Abstract**

A composite material is presented which comprises at least a first layer of a fire retardant paper and a second layer of a water repellent or water tight plastic material (such as a polyethylene or polypropylene film attached to the adjacent layer using an extrusion coating process or a laminating process) attached thereto. Between the first and second layers a third layer may be provided which at least comprises a gas tight metal (such as aluminium applied directly onto an adjacent layer by metalizing or laminating). A fourth layer may be attached to the first layer at the side facing away from the second layer, which fourth layer is similar to the second layer. Sheet material comprising such a composite material are presented too.

## Description

The invention, in a first aspect, relates to a composite material. The type of composite materials to which the invention applies is composite materials in which a number of distinct interconnected layers may be distinguished (and not composite materials in which, basically, a blend of different materials mixed together is used).

It is an object of the present invention to provide a novel composite material with improved properties and, thus, enhanced applicability.

In accordance with the present invention the composite material comprises at least a first layer of a fire retardant paper and a second layer of a water repellent or water tight plastic material attached thereto.

The composite material obtained combines at least two important features into a single material: fire retardancy and water repellency/water tightness. Such a material may be used advantageously in building constructions or alike.

The field of application of the composite material may be widened when between the first and second layers a third layer at least comprising a gas tight metal is provided. This adds a further important property to the material: gas tightness. As a result the composite material not only will be able to withstand a wide range of external influences (entrance of fluids, gas, fire) but also may be of use in combination with construction materials containing gases which otherwise would egress slowly in time (such as materials comprising gases for enhancing the fire retardancy or isolation capacity).

Such a third layer may comprise a metal layer provided on a carrier, wherein the metal layer faces the second layer. For example the carrier may comprise a paper material.

As an alternative, however, the third layer may comprise only a metal layer which, then, is directly attached to an adjacent layer without the use of an additional carrier.

In one embodiment of the composite material according to the present invention the second layer of a water repellent or water tight plastic material is attached to the adjacent layer using an extrusion coating process. Basically, during an extrusion coating process a resin is melted and formed into a thin hot film which is coated onto a flat substrate (here the adjacent layer). The coated substrate then passes between a set of counter rotating rolls which press the coating onto the substrate to ensure a complete contact and adhesion.

In an alternative embodiment of the composite material the second layer of a water repellent or water tight plastic material is attached to the adjacent layer using a laminating process. Basically, during a laminating process (also referred to as extrusion laminating or sandwich laminating) an extrusion coated layer is used as an adhesive layer between two or more substrates. A secondary layer is applied to the extrusion coating while still being hot. The sandwich is then pressed together by pressure rolls.

Preferably the water repellent or water tight plastic material comprises a polyethylene or polypropylene film. But also other plastic materials having the desired characteristics, are conceivable.

When used in such a composite material according to the invention, the polyethylene or polypropylene film should be sufficiently thick to create the desired barrier against water (or any other liquid or even fluid), while still having as little body mass as possible to prevent creating a material mass which in an unfavourable manner increases the amount of flammable material and thus counteracts the fire retardant effect of the first layer to which this film is attached. Thus, it is preferred that the polyethylene film has a thickness between 9 and 55 microns and the polypropylene film has a thickness between 20 and 45 microns (roughly corresponding to specific weights of the polyethylene film between 9 gsm (grams per square meter) and 50 gsm and of the polypropylene film between 18 gsm and 40 gsm).

Further it is possible that the third layer, if present, is applied directly onto an adjacent layer by metalizing or laminating. Moralizing involves vaporizing a metal which then is condensed and applied as a thin veneer onto a cold surface (here the adjacent layer) using electrolysis. Laminating involves bonding the third layer directly to the adjacent layer.

In a handy embodiment of the composite material according to the present invention the third layer, if provided, comprises aluminium.

In yet another embodiment of the composite material according to the present invention a fourth layer is attached to the first layer at the side facing away from the second layer, which fourth layer is similar to the second layer. Thus, this fourth layer may comprise a water repellent or water tight plastic material.

It is noted that any layer mentioned also may have additional properties aside from the properties specified. For example, the second layer also may be gas tight.

Finally it is possible that the composite material is provided with an auto-adhesive layer at its outer side facing away from the second layer, covered with a peelable protective strip. After peeling off the protective strip the composite material may be attached (bonded) to another object without the use of additional tools or materials.

In a second aspect the present invention relates to a sheet material, such as foam sheets, (undulated) card board sheets etcetera, onto at least one side of which a composite material according to any of the previous claims is attached. Such a sheet material therefore is a combination of a base sheet known in the state of the art having attached to at least one (and in most cases, only one) side a composite material according to the state of the art. The base sheet, for example, may comprise an isolating foam sheet or plate in which, for increasing its isolation capacity, gas is encapsulated. One side of the foam sheet or plate generally will be in contact with part of a construction, such as a wall, floor or ceiling of a building. The opposite side then is provided with the composite material according to the present invention to prevent or slow down the egress of the gas from the foam sheet or plate.

In such a sheet material the composite material may be attached thereto by laminating or gluing.

Hereinafter the invention will be elucidated while referring to the drawings which show embodiments thereof and wherein:
Figures 1-5 show different embodiments of a composite material in accordance with the present invention, and
Figure 6 shows an embodiment of a sheet material applied to a wall of a building.

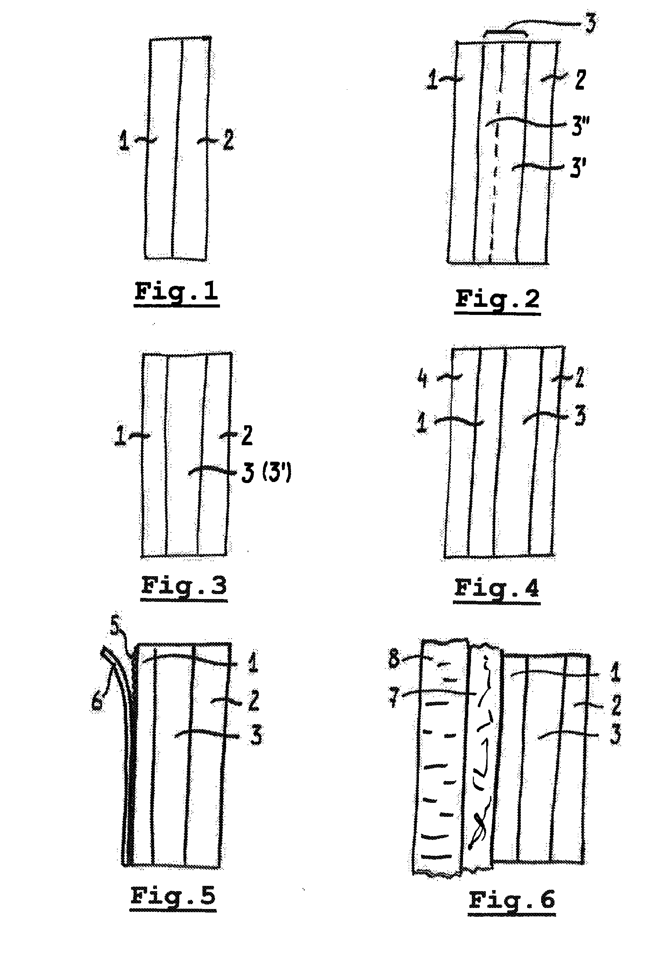

It is noted that in the figures (which schematically show cross sections) the objects shown are not to scale and that some dimensions may be exaggerated for illustration purposes. Firstly referring to figure 1, an embodiment of the composite material is illustrated which comprises a first layer 1 of a fire retardant paper and a second layer of a water repellent or water tight plastic material 2 attached thereto.

This second layer 2 of a water repellent or water tight plastic material may be attached to the first layer 1 using an extrusion coating process or using a laminating process . The second layer may comprise a polyethylene or polypropylene film, wherein the polyethylene film preferably has a thickness between 9 and 55 microns and the polypropylene film preferably has a thickness between 20 and 45 microns.
Figure 2 shows a second embodiment of the composite material wherein between the first layer 1 and second layer 2 a third layer 3 comprising a gas tight metal is provided. Said third layer 3 comprises a metal layer 3' provided on a carrier 3". The metal layer 3' faces the second layer 2. The carrier 3" may comprise a paper material.
Figure 3 illustrates a similar embodiment in which, however, the third layer 3 comprises only the metal layer 3'.

The third layer preferably is applied directly onto an adjacent layer by metalizing or laminating and may comprise aluminium (although also other metals are conceivable).

Referring to figure 4 a fourth embodiment is shown in which the composite material comprises a fourth layer 4 attached to the first layer 1 at the side facing away from the second layer 2, which fourth layer 4 is similar to the second layer. Such a fourth layer correspondingly could be attached to the composite material of any of the figures 1-3 (not illustrated).

Figure 5 schematically shows an embodiment (here similar to the embodiment illustrated in figure 3) of the composite material, provided now with an auto-adhesive layer 5 at its outer side facing away from the second layer 2, covered with a peelable protective strip 6.

Finally figure 6 illustrates a foam sheet 7 onto one side of which a composite material (in this case as illustrated in figure 3) is attached. The resulting sheet material is attached to a wall 8 of a building in any appropriate manner (for example laminating, gluing, nailing, stapling).

The invention is not limited to the embodiments described before which may be varied widely within the scope of the invention as defined by the appending claims.

## Claims

1. Composite material which comprises at least a first layer of a fire retardant paper and a second layer of a water repellent or water tight plastic material attached thereto.

2. Composite material according to claim 1,
wherein between the first and second layers a third layer at least comprising a gas tight metal is provided.

3. Composite material according to claim 2,
wherein the third layer comprises a metal layer provided on a carrier, wherein the metal layer faces the second layer.

4. Composite material according to claim 3,
wherein the carrier comprises a paper material.

5. Composite material according to claim 2,
wherein the third layer comprises only a metal layer.

6. Composite material according to any of the previous claims, wherein the second layer of a water repellent or water tight plastic material is attached to the adjacent layer using an extrusion coating process.

7. Composite material according to any of the claims 1-5, wherein the second layer of a water repellent or water tight plastic material is attached to the adjacent layer using a laminating process.

8. Composite material according to any of the previous claims, in which the water repellent or water tight plastic material comprises a polyethylene or polypropylene film.

9. Composite material according to claim 8,
wherein the polyethylene film has a thickness between 9 and 55 microns and the polypropylene film has a thickness between 20 and 45 microns.

10. Composite material according to any of the previous claims and claim 2, wherein the third layer is applied directly onto an adjacent layer by metalizing or laminating.

11. Composite material according to any of the previous claims and claim 2, wherein the third layer comprises aluminium.

12. Composite material according to any of the previous claims, comprising a fourth layer attached to the first layer at the side facing away from the second layer, which fourth layer is similar to the second layer.

13. Composite material according to any of the previous claims, provided with an auto-adhesive layer at its outer side facing away from the second layer, covered with a peelable protective strip.

14. Sheet material, such as foam sheets, (undulated) card board sheets etcetera, onto at least one side of which a composite material according to any of the previous claims is attached.

15. Sheet material according to claim 14, in which the composite material is attached thereto by laminating or gluing.
